# EUROPEAN PATENT SPECIFICATION

(11) **EP 0 311 649 B1**
(45) Date of publication and mention of the grant of the patent: **18.11.1993**
(21) Application number: 88902277.8
(22) Date of filing: 29.01.1988
(51) Int. Cl.: H02H 3/16, H02H 3/33

(54) **ADD-ON GROUND FAULT MODULE**
ZUSATZMODUL ZUR ERDSCHLUSSERMITTLUNG
MODULE RAPPORTE DE DETECTION DE COURT-CIRCUIT A LA MASSE

(30) Priority: 30.01.1987 US 9418
(43) Date of publication of application: 19.04.1989
(73) Proprietor: SQUARE D COMPANY, Palatine, Illinois 60067 (US)
(72) Inventor: ZYLSTRA, Henry, J., Alburnette, IA 52202 (US)
(74) Representative: Baillie, Iain Cameron
(86) International application number: US8800277
(87) International publication number: WO8805973

(56) References cited:
- DE-A- 3 537 040
- DE-B- 1 046 161
- FR-A- 1 320 791
- GB-A- 1 152 793

## Description

### Technical Field

The present invention relates generally to overcurrent protection devices and, more particularly, to a ground fault module that is particularly adapted for connection to a circuit breaker which is automatically tripped when a ground fault current is detected.

### Background Prior Art

Ground fault conditions result in an imbalance or inequality in currents flowing from a source to and from a load. One manner of detecting this imbalance in the past has been to utilize a transformer having an opening or "window" through which the conductors of the circuit are passed with a relay connected to the transformer that is activated to interrupt the circuit whenever a ground fault condition occurs.

Various alternate types of approaches of detecting ground faults have been proposed, including the interconnection of the secondary windings of the phase current transformers into a summing circuit which will result in a zero output when there is no ground fault condition present. However, if the summation of the secondary circuits is not zero, a ground fault condition exists and various solid state circuitry has been proposed for utilizating the ground fault condition as a tripping signal for relay activated circuit breakers.

Industrial circuit breakers which respond to overcurrent conditions ranging from overload to short-circuit are common and have many applications. Many of these devices also incorporate sensing devices to sense a ground fault condition and to activate the circuit breaker when such ground fault conditions occur.

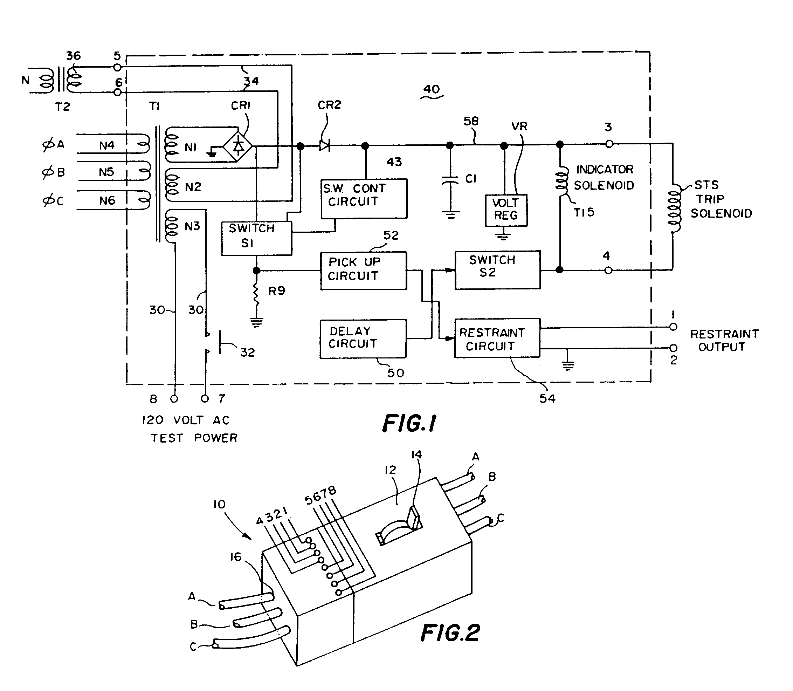

Fachkunde Elektrotechnik 10. Auflage 1974, pages 369 and 370, Fig. 370/1 discloses a summing current transformer having primary windings series connected to a respective conductor, and a secondary winding for detecting a fault and to disconnect the conductors from the circuit.

GB-A-2082408 discloses an earth leakage circuit-breaker having a core-balanced transformer 4 with the primary coupled to the conductors of an electrical distribution system and the secondary for detecting a fault current. The circuit-breaker includes a capacitor 5 which is charged by the transformer in a manner dependent on the fault current and which discharges on reaching a certain charging voltage of the capacitor by way of a voltage-dependent semiconductor element 7 in pulses by way of the trip coil of a fault current tripping device.

US-A-4258403 discloses a ground fault circuit interrupter wherein primary windings SP1-SP3 and SPN are inductively linked to conductors L1-L3 and N by means of transformers CT1-CT3 and CTN. The conductors L1-L3 and N serve as the primary windings for the transformers CT1-CT3 and CTN.

GB-A-1152793 discloses an earth leakage protection device 1 having a transformer 2 which includes secondary windings 4 and 5 and wherein single turn the primary windings 3 comprise supply lines 6 and 7 of the power supply system. The secondary winding 4 senses an unbalanced condition in the supply lines 6 and 7. The secondary winding 4 is coupled to an amplifier which develops a signal upon an unbalanced condition to open the contacts of the circuit breaker. The secondary winding 5 is connected to a test switch 41 which when closed completes a circuit causing a simulated unbalanced condition.

### Summary of the Invention

According to the present invention, an add-on ground fault system has been developed which can be connected directly to the inputs of a conventional shunt trip operated circuit breaker. The ground fault system consists of a main transformer that has primary windings connected directly to conductors leading to the associated circuit breaker and at least one secondary winding to detect any imbalance in the primary windings and to produce an output if the sum of the inputs is not zero. The output is then processed through electronic circuitry and becomes the power source for activating a shunt trip solenoid of the circuit breaker.

The system is also designed for use in a four-wire electrical systems using a separate transformer for the fourth or neutral wire, the output of which is connected to a secondary winding and summed with the main transformer outputs. A third secondary winding of the transformer provides a test function whereby a test voltage can be applied which results in current flow simulating a ground fault to effect an imbalanced current condition in the primary conductors.

More specifically, the present invention provides a ground fault detection system comprising: a summing transformer having three primary windings of which each is adapted for series connection to a respective conductor in an electrical distribution system; at least one secondary winding, said primary windings are each adapted for series connection to a respective conductor of said electrical circuit breaker, said secondary winding detecting any current imbalance in the three primary windings; an electronic circuit connected to said secondary winding and providing an output signal to a shunt trip solenoid of an associated electrical circuit breaker when said secondary winding detects any imbalance in the current in the three primary windings and capacitor means chargeable to a preselected voltage level; characterized by a switch control circuit for selectively turning ON and OFF to periodically place a relatively low resistance burden on the summing transformer to measure the net current flow; said switch control circuit coupling said burden to said transformer when said capacitor is charged to a preselected voltage level.

In a further embodiment of the present invention, the electronic circuit includes a voltage regulator for assuring the voltage is at a preselected state prior to measurement of the current flow from the summing transformer. If the current flow in the summing transformer exceeds a certain level for a preselected time period, the current flow is utilized for energizing a solenoid that activates the shunt trip in the circuit breaker.

The electronic circuit may also include a pick-up circuit for initiating a signal to provide a tripping signal to the time-delay circuit and thereafter provides tripping energy to the solenoid. The control circuit may also include a restraining circuit for providing a signal to the circuit breakers that are located upstream of the ground fault detection system to isolate the circuit breaker associated with the ground fault detection system.

The ground fault detection system is also designed to be utilized with a three-phase electrical system with or without a neutral conductor. In the case of a system having a neutral conductor, a separate transformer is provided for the neutral conductor, and the neutral conductor is electrically connected to one of the secondary windings of the summing transformer. Any current flow in the neutral conductor will be transmitted to a secondary winding of the summing transformer, which will in turn be detected by the secondary winding associated with the control circuit.

The control circuit means may also include a test switch means associated with one of the secondary windings of the summing transformer so that an associated voltage source may be applied to the transformer to create an imbalance condition in the primary windings and simulate a ground fault condition.

### Brief Description of Several Views of Drawings

FIG. 1 is a schematic illustration in block form of the electronic circuit forming part of the ground fault detection system;
FIG. 2 is a perspective view of the add-on module and an associated circuit breaker; and,
FIG. 3 is a detailed diagram of the ground fault electronic circuit.

### Detailed Description

While this invention is susceptible of embodiment in many different forms, there is shown in the drawings and will herein be described in detail a preferred embodiment of the invention with the understanding that the present disclosure is to be considered as an exemplification of the principles of the invention and is not intended to limit the broad aspect of the invention to the embodiment illustrated.

Referring to FIG. 2, an add-on ground fault module, designated by reference numeral 10, is interconnected with a conventional shunt trip operated circuit breaker 12 that incorporates a shunt trip solenoid for interrupting the circuit breaker in the event of an overload condition. The circuit breaker 12 may be of the type sold by the Square D Company and includes a manual switch 14 in addition to the shunt trip solenoid (not shown) for interrupting the circuit. As is conventional, the circuit breaker normally has three conductors A, B and C connected to the OFF side through input sockets (not shown) of the circuit breaker.

According to one aspect of the present invention, the add-on module 10 incorporates standard lugs (not shown) that are received into the input sockets of the circuit breaker and the module 10 has three input terminals 16 for receiving the respective conductors A, B and C of a three-phase electrical sytem. The module 10 has a plurality of connector terminals labeled by numbers 1-8 in FIG. 2 which are connected to the circuit illustrated in FIG. 1.

An electronic circuit incorporated into the ground fault module 10 is illustrated schematically in FIG. 1. The circuit includes a transformer T1 having primary windings N4, N5, N6 for connection to the three A-C power lines A, B and C. Transformer T1 also has three secondary windings N1, N2 and N3.

Secondary winding N3 is connected through conductors 30 and a switch 32 to external terminals 7 and 8 of module 10 to provide a test function, as will be described later. The secondary winding N2 is connectable by conductors 34 through terminals 5 and 6 of module 10 to the secondary winding 36 of a neutral transformer T2. Transformer T2 has its primary windings N connected to a neutral conductor (not shown). The first secondary winding N1 is utilized as a detector for detecting a ground fault condition in any one of the primary windings N4, N5 and N6 or neutral winding N.

Secondary winding N1 is connected through a full-wave bridge rectifier CR1 to the electronic circuitry, generally indicated by reference numeral 40. The electronic circuitry 40 includes a voltage regulator VR, a switch control circuit 43, first and second switches and associated circuits S1 and S2, a capacitor C1, a delay circuit 50, a pick-up circuit 52, and a restraint output circuit 54. The foregoing circuitry is coupled between the bridge CR1 and a shunt trip solenoid STS that is part of the circuit breaker 12. The rectifier bridge CR1 is also connected to the trip solenoid STS through a diode CR2 and conductor 58.

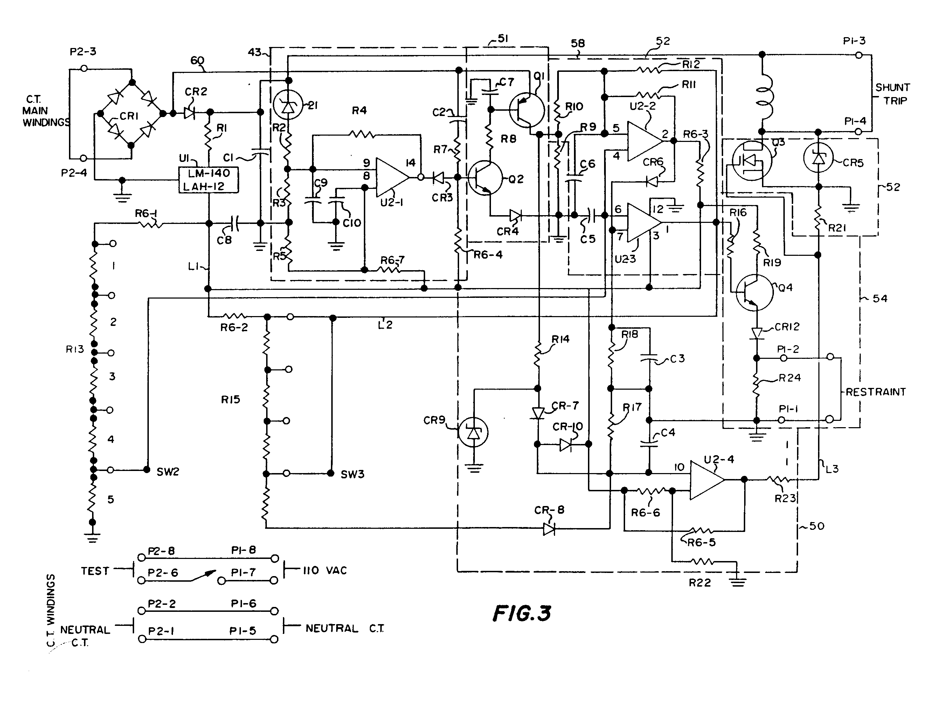

The various components and functional embodiments of the control circuit 40 are illustrated in more detail in FIG. 3. In FIG. 3, the output from the full wave rectifier bridge CR1 is coupled through diode CR2 to the switch control circuit 43. Diode CR2 also connects through resistor R1 to voltage regulator component U1 and through lead L1 to various other components, as will be explained.

A capacitor C1 is connected across the input of switch control circuit 43. The input from rectifier CR1 is impressed across capacitor C1 and is also applied across zener diode 21 and series connected resistors R2 and R3 of control circuit 43. The cathode of zener diode 21 is connected to lead 58 and its anode is connected through series resistors R2, R3, R5 and R6-7 to lead L1. The junction of resistors R2 and R3 is connected to the non-inverting input terminal 9 of comparator U2-1 of switch control circuit 43 and the junction of resistors R5 and R6-7 is connected to the inverting input terminal 8 of comparator U2-1. A reference voltage is coupled from voltage regulator U1 to the comparator U2-1 through resistor R6-7.

The output of the comparator U2-1 is connected through reverse connected diode CR3 to the base of an NPN transistor Q2 which forms part of the first switch S1. Switch S1 comprises transistor Q2 which drives a PNP transistor Q1. The emitter of the transistor Q1 is connected through lead 60 to the output of the bridge CR1, for purposes to be described later. The collector of transistor Q1 is coupled to the junction of resistor R9 and R10.

The pick-up circuit 52, is coupled between switches S1 and S2 and is also connected between the switch S1 and the restraint output circuit 54. Comparator U2-2 of pick-up circuit 52 has its output connected through a diode CR6 to the inverting input 7 of a second comparator U2-3. The restraint circuit 54 receives an enabling signal from comparator U2-3 and provides an output restrain signal through an NPN transistor Q4, as will be described.

Capacitor C4 and comparator U2-4 form a part of time delay circuit 50, as will be described.

In the circuit of FIG. 3, approximately five volts is applied from voltage regulator U1 to the junction of resistors R5 and R6-7 and hence to inverting terminal 8 of the comparator U2-1. Assume the condition that the capacitor C1 is charging. In this condition, a low voltage is applied to the non-inverting input 9 of the comparator U2-1, and the output of comparator U2-1 is low. As the capacitor C1 charges, the voltage to the non-inverting input 9 of the comparator U2-1 exceeds the reference voltage at the inverting input 8 and the output of comparator U2-1 changes from a low output to a high output. This occurs when the voltage charge on the capacitor C1 reaches a predetermined level of about 48 volts.

As a result of the comparator U2-1 changing state, the transistor Q2 of the switch S1 changes from a non-conducting to a conducting state and this causes transistor Q1 of switch S1 to change from a non-conducting to a conducting state. When transistor Q1 conducts, a very low resistance burden is placed on the summing transformer T1 through the lead 60. During the time the transistor Q1 is conducting, the summing transformer T1 accurately measures the net current flow. The current from the secondary winding N1 flows through transistor Q1 and resistor R9 as an input to the relay pick-up circuit 52. The resulting voltage developed across resistor R9 is coupled to the non-inverting input 5 of comparator U2-2. Capacitor C6 in conjunction with resistor R10 act as an electrical filter for high frequency noise.

During this time when the circuit is metering the current, the power is supplied to the circuit by the storage capacitor C1. When the capacitor C1 discharges to a lower voltage of about 44 volts, the comparator U2-1 changes states, and this will cause transistor Q1 to change from a conductive to a non-conducting state. This will again allow the capacitor C1 to recharge to its maximum voltage of 48 volts.

Note that the operation of the voltage regulator including U1, resistor R1 and capacitor C8 is such that its output reaches the regulated voltage prior to the change in state of comparator U2-1 and transistors Q1 and Q2.

When the value of the metering signal voltage appearing at the non-inverting terminal 5 of the comparator U2-2 of pick-up circuit 52 exceeds the reference voltage appearing at inverting input terminal 4 of comparator U2-2, the output of the comparator U2-2 changes from a low to a high output. This results in charging of the capacitor C3 of restraint circuit 54. Capacitor C3 is charged through diode CR6. Capacitor C3 is also connected to the inverting input of comparator U2-3 of pick-up circuit 52, and when capacitor C3 charges, it causes comparator U2-3 to change from a low to a high output. A high output from the comparator U2-3 causes NPN transistor Q4 to conduct to provide a restraint signal to an upstream circuit breaker. If the pick-up output from the comparator U2-3 remains high, the circuit will provide tripping energy to the tripping solenoid STS at the end of the time delay as will now be explained.

When pick-up occurs, capacitor C4 of the time delay circuit 50 is allowed to charge through resistor R6-2 and the series resistors R15 and diode CR8. Capacitor C4 also receives a component of charge from the fault current appearing across resistor R9. This charge flows through resistor R14 and diode CR7. This second current path reduces the time delay as fault current increases. Diode CR9 limits the contribution from resistor R9 at very high fault levels. The time delay is also varied by adjusting the value of resistor R15. If the pick-up signal remains high, capacitor C4 will charge to the reference voltage which is impressed on non-inverting terminal pin 10 of comparator U2-4 to provide an output to switch S2. This positive output signal from the comparator U2-4 is applied through resistor R2-3 and lead L3 to the gate of the FET Q3 causing it to change from a non-conducting to a conducting state. This will allow the capacitor C1 to discharge through the tripping solenoid STS and the tripping indicator solenoid TIS resulting in the tripping of the circuit breaker and an indication of the tripping event.

When the output of the comparator U2-2 goes from a low to a high voltage level, it causes a change in the output of comparator U2-3 which in turn causes transistor Q4 to conduct. This develops a five-volt signal across the resistor R24 of restraint circuit 54. The output of the restraint circuit 54 will thus provide a reference voltage signal to an upstream breaker whenever a ground fault is detected and the pick-up is exceeded.

## Claims

1. A ground fault detection system comprising: a summing transformer (T1) having three primary windings (N4, N5, N6) of which each is adapted for series connection to a respective conductor (A, B, C) in an electrical distribution system; at least one secondary winding (N1), said primary windings (N4, N5, N6) are each adapted for series connection to a respective conductor of said electrical circuit breaker (12), said secondary winding (N1) detecting any current imbalance in the three primary windings (N4, N5, N6); an electronic circuit (40) connected to said secondary winding (N1) and providing an output signal to a shunt trip solenoid (STS) of an associated electrical circuit breaker when said secondary winding (N1) detects any imbalance in the current in the three primary windings (N4, N5, N6); and capacitor means (C1) chargeable to a preselected voltage level; characterized by a switch control circuit (S1) for selectively turning ON and OFF to periodically place a relatively low resistance burden (R9) on the summing transformer (T1) to measure the net current flow; said switch control circuit (S1) coupling said burden (R9) to said transformer (T1) when said capacitor (C1) is charged to a preselected voltage level.

2. The system of Claim 1, said electronic circuitry (40) characterized by: a voltage regulator (U1) for assuring a tripping of the solenoid (STS); a time delay circuit (50) for delaying input signals to the tripping solenoid (STS); a pick-up circuit (52) for initiating a signal to provide a tripping signal to the time delay circuit (50) and tripping energy to said solenoid (STS); switch means (52) for coupling the tripping energy to said solenoid (STS); and a restraining circuit (54) for providing a signal to circuit breakers (12) located on the line side of said ground fault detection system.

3. The system of Claim 2, said electronic circuitry (40) characterized by: means for measuring the net current flow in said transformer; means for developing metering voltage representative of said net current flow; said relay pick-up circuit (52) for detecting said metering voltage and being energizable in response to a metering signal above a selected reference; said capacitor means (C1) providing the power to said circuit (40) during the time the circuit (40) is metering said net current flow and thereby discharging; and a tripping relay energizable by said time delay means (50) at the end of said preset time delay.

4. The system of Claim 1, wherein the electrical distribution system includes a neutral conductor, characterized in that: said summing transformer (T1) includes a second secondary winding (N2); a neutral current transformer (T2) having a primary winding (N) adapted for series connection to the neutral conductor; said neutral current transformer (T2) having a secondary winding connected to said second secondary winding (N2) of the summing transformer (T1); and said first secondary winding (N1) summing the currents in the three primary windings (N4, N5, N6) and the current provided by the neutral current transformer (T2) to provide an indication of the balanced and imbalanced ground fault condition in the conductor (A, B, C) and neutral conductor of the electrical distribution system.

5. The system of Claim 4, characterized by a third secondary winding (N3), and test switch means (32) for connecting said third secondary winding (N3) to an associated AC voltage source whereby, when the text switch mean (32) is closed, the associated AC voltage source is converted from a voltage source to a current source and the resulting current flow creates an imbalanced condition in the primary windings (N4, N5, N6, N) to simulate a ground fault.

## Patentansprüche

1. Erdschlußermittlungssystem, dadurch gekennzeichnet, daß es folgendes umfaßt:
einen Summiertransformator (T1) mit drei Primärwicklungen (N4, N5, N6), von denen jede für eine Reihenschaltung mit einem enstsprechenden Stromleiter (A, B, C) in einem elektrischen Verteilungsnetz adaptiert ist; mindestens eine Sekundärwicklung (N1), wobei jede der genannten Primärwicklungen (N4, N5, N6) zur Reihenschaltung mit einem entsprechenden Leiter des genannten elektrischen Schalters (12) adaptiert ist, wobei die genannte Sekundärwicklung (N1) jedes Stromungleichgewicht in den drei Primärwicklungen (N4, N5, N6) ermittelt; ein elektronischer Schaltkreis (40), der mit der genannten Sekundärwindung (N1) verbunden ist und der für ein Ausgangssignal an ein Nebenschluß-Auslöse-Elektromagnet (STS) eines zugeordneten elektrischen Schalters sorgt, wenn die genannte Sekundärwicklung (N1) ein Stromungleichgewicht in den drei Primärwicklungen (N4, N5, N6) ermittelt; und eine Kondensatoreinrichtung (C1), die bis auf eine vorbestimmte Spannungshöhe aufladbar ist; gekennzeichnet durch einen Schaltungs-Regelkreis (S1), zum selektiven Ein- und Ausschalten, um so periodisch eine verhältnismäßig niederohmige Belastung (R9) an dem Summiertransformator (T11) anzulegen, um den reinen Stromfluß zu messen; wobei der genannte Schaltungs-Regelkreis (S1) die genannte Belastung (R9) mit dem genannten Transformator (T1) koppelt, wenn der genannte Kondensator (C1) auf eine vorbestimmte Spannungshöhe geladen wird.

2. System nach Anspruch 1, wobei der genannte elektronische Schaltkreis (40) durch folgendes gekennzeichnet ist: einen Spannungsregler (U1), der für eine Auslösung des Magnets (STS) sorgt; einen Zeitverzögerungsschaltkreis (50), um die Eingangssignale an den Auslösemagnet (STS) zu verzögern; einen Aufschaltschaltkreis (52) zur Auslösung eines Signals, um dem Zeitverzögerungsschaltkreis (50) ein Auslösesignal bereitzustellen und um dem genannten Magnet (STS) Auslöseenergie bereit zustellen; eine Schaltungseinrichtung (52), zur Kopplung der Auslöseeneergie mit dem genannten Magnet (STS); und ein Halteschaltkreis (54), um den Schaltern (12), die sich auf der Leitungsseite des Erdschlußermittlungssystems befinden, ein Signal bereitzustellen.

3. System nach Anspruch 2, wobei der elektronische Schaltkreis (40) durch folgendes gekennzeichnet ist: eine Einrichtung zur Messung des reinen Stromflusses in dem genannten Transformator; eine Einrichtung zur Entwicklung einer Meßspannung, die den genannten reinen Stromfluß darstellt; den genannten Auffschaltschaltkreis (52) zur Ermittlung der genannten Meßspannung und wobei dieser als Folge auf ein Meßsignal über die vorbestimmte Bezugsspannung erregbar ist; die genannte Kondensatoreinrichtung (C1), die den genannten Schaltkreis (40) in der Zeit mit Strom versorgt, während welcher der Schaltkreis (40) den reinen Stromfluß mißt und dabei entlädt; und ein Ausklinkrelais, das an dem Ende der vorbestimmten Zeitverzögerung durch die genannte Zeitverzögerungseinrichtung (50) erregbar ist.

4. System nach Anspruch 1, wobei das elektrische Verteilungssystem einen Neutralleiter aufweist, durch folgendes gekennzeichnet: daß der genannte Summiertransformator (T1) eine zweite Sekundärwicklung (N2) aufweist; durch einen Ruhestromtransformator (T2) mit einer Primärwicklung (N), adaptiert zur Reihenschaltung mit dem Nulleiter; daß der genannte Ruhestromtransformator (T2) eine Sekundärwicklung aufweist, die mit dar genannten zweiten Sekundärwicklung (N2) des Summiertransformators (T1) verbunden ist; und dadurch, daß die genannte erste Sekundärwicklung (N1) den Strom in den drei Primärwicklungen (N4, N5, N6) und den durch den Ruhestromtransformator (T2) bereitgestellten Strom summiert, um so für eine Anzeige des ausgeglichenen und unausgeglichenen Erdschlußzustands in dem Stromleiter (A, B, C) und dem Neutralleiter des elektrischen Verteilungssystems zu sorgen.

5. System nach Anspruch 4, gekennzeichnet durch eine dritte Sekundärwicklung (N3) und eine Prüfwahlschaltereinrichtung (32), zur Verbindung der genannten dritten Sekundärwicklung (N3) mit einer zugeordneten Wechselstromspannungsquelle, wobei die zugeordnete Wechselstromspannungsquelle von einer Spannungsquelle in eine Stromquelle umgewandelt wird, wenn die genannte Prüfwahlschaltereinrichtung (32) geschlossen wird und wobei der sich ergebende Stromfluß einen Ungleichgewichtszustand in den Primärwicklungen (N4, N5, N6) erzeugt, um einen Erdschluß zu simulieren.

## Revendications

1. Système de détection de court-circuit à la masse comprenant : un transformateur de sommation (T1) comportant trois enroulements primaires (N4, N5, N6) dont chacun est conçu pour une connexion série à un conducteur respectif (A, B, C) dans un système de distribution électrique ; au moins un enroulement secondaire (N1), lesdits enroulements primaires (N4, N5, N6) sont chacun conçus en vue d'une connexion série à un conducteur respectif dudit interrupteur de circuit électrique (12), ledit enroulement secondaire (N1) détectant tout déséquilibre de courant dans les trois enroulements primaires (N4, N5, N6) ; un circuit électronique (40) connecté audit enroulement secondaire (N1) et produisant un signal de sortie pour un solénoïde de déclenchement d'interruption (STS) d'un interrupteur de circuit électrique associé lorsque ledit enroulement secondaire (N1) détecte un quelconque déséquilibre dans le courant dans les trois enroulements primaires (N4, N5, N6) ; un moyen de capacité (C1) pouvant être chargé jusqu'à un niveau de tension pré-sélectionné, caractérisé par un circuit de commande de commutation (S1) pour réaliser sélectivement un passage à l'état passant et un passage à l'état bloqué afin de placer périodiquement une charge à valeur de résistance relativement faible (R9) sur le transformateur de sommation (T1) afin de mesurer la circulation de courant nette ; ledit circuit de commande de commutation (S1) couplant ladite charge (R9) audit transformateur (T1) lorsque ladite capacité (C1) est chargée jusqu'à un niveau de tension pré-sélectionné.

2. Système selon la revendication 1, ledit circuit électronique (40) étant caractérisé par : un régulateur de tension (U1) pour assurer un déclenchement du solénoïde (STS) ; un circuit de retard temporel (50) pour retarder des signaux d'entrée appliqués au solénoïde de déclenchement (STS) ; un circuit de lecture (52) pour initialiser un signal afin de produire un signal de déclenchement pour le circuit de retard temporel (50) et pour déclencher de l'énergie sur ledit solénoïde (STS) ; un moyen de commutation (52) pour coupler l'énergie de déclenchement audit solénoïde (STS) ; et un circuit de limitation (54) pour produire un signal pour des interrupteurs de circuit (12) situés sur le côté de ligne dudit système de détection de court-circuit à la masse.

3. Système selon la revendication 2, ledit circuit électronique (40) étant caractérisé par : un moyen pour mesurer la circulation de courant nette dans ledit transformateur ; un moyen pour développer une tension de mesure représentative de ladite circulation de courant nette ; ledit circuit de lecture à relais (52) pour détecter ladite tension de mesure et pouvant être excité en réponse à un signal de mesure supérieur à une référence sélectionnée ; ledit moyen de capacité (C1) alimentant ledit circuit (40) pendant le temps où le circuit (40) mesure ladite circulation de courant nette et le déchargeant ainsi ; et un relais de déclenchement excitable par ledit moyen de retard temporel (50) à la fin dudit retard temporel pré-établi.

4. Système selon la revendication 1, dans lequel le système de distribution électrique inclut un conducteur neutre, caractérisé en ce que : ledit transformateur de sommation (T1) inclut un second enroulement secondaire (N2) ; un transformateur de courant neutre (T2) comportant un enroulement primaire (N) conçu en vue d'une connexion série au conducteur neutre ; ledit transformateur de courant neutre (T2) comportant un enroulement secondaire connecté audit second enroulement secondaire (N2) du transformateur de sommation (T1) ; et ledit premier enroulement secondaire (N1) sommant les courants dans les trois enroulements primaires (N4, N5, N6) et le courant produit par le transformateur de courant neutre (T2) afin de produire une indication de la condition de court-circuit à la masse équilibrée et déséquilibrée dans le conducteur (A, B, C) et dans le conducteur neutre du système de distribution électrique.

5. Système selon la revendication 4, caractérisé par un troisième enroulement secondaire (N3) et par un moyen de commutation de test (32) pour connecter ledit troisième enroulement secondaire (N3) à une source de tension alternative associée d'où il résulte que lorsque le moyen de commutation de test (32) est fermé, la source de tension alternative associée est convertie d'une source de tension à une source de courant et la circulation de courant résultante crée une condition déséquilibrée dans les enroulements primaires (N4, N5, N6, N) afin de simuler un court-circuit à la masse.
